(19) **Europäisches Patentamt European Patent Office Office européen des brevets**

(11) **EP 4 670 940 A1**

(12) **EUROPEAN PATENT APPLICATION**
published in accordance with Art. 153(4) EPC

(43) Date of publication:
**31.12.2025 Bulletin 2026/01**

(21) Application number: **24868323.7**

(22) Date of filing: **19.09.2024**

(51) International Patent Classification (IPC):
***B29B 11/14*** (2006.01)   ***B29B 17/02*** (2006.01)

(52) Cooperative Patent Classification (CPC):
**B29B 11/14; B29B 17/02;** Y02W 30/62

(86) International application number:
**PCT/JP2024/033520**

(87) International publication number:
**WO 2025/063246 (27.03.2025 Gazette 2025/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.09.2023 PCT/JP2023/034517**

(71) Applicant: **LIXIL Corporation**
**Tokyo 141-0033 (JP)**

(72) Inventors:
• **KANAMORI, Hiroyuki**
**Tokyo 141-0033 (JP)**

• **YAO, Takashi**
**Tokyo 141-0033 (JP)**
• **KUMANO, Takashi**
**Tokyo 141-0033 (JP)**
• **UOZUMI, Naohiro**
**Tokyo 141-0033 (JP)**
• **HIRAMOTO, Koji**
**Tokyo 141-0033 (JP)**
• **OGASAWARA, Aya**
**Tokyo 141-0033 (JP)**
• **MATSUO, Hideki**
**Tokyo 141-0033 (JP)**

(74) Representative: **Grünecker Patent- und Rechtsanwälte PartG mbB Leopoldstraße 4 80802 München (DE)**

(54) **METHOD FOR PRODUCING RESIN COMPOSITION MOLDED BODY**

(57) A method for producing a resin composition molded body according to the present disclosure comprises: preparing a plastic waste containing a low melting point resin having a melting point in the range of 80°C to less than 190°C and a non-low melting point resin that is a high melting point resin or a thermosetting resin having a melting point of 190°C or higher; pulverizing the plastic waste to obtain a resin composition powder; adding at least one of a low melting point resin-containing powder and a non-low melting point resin-containing powder prepared in advance to the resin composition powder, and mixing to obtain a resin composition powder mixture adjusted so that the ratio of the content of the low melting point resin to the content of the non-low melting point resin falls within a predetermined range; and molding the resin composition powder mixture to obtain a resin composition molded body.

FIG. 1

## Description

TECHNICAL FIELD

The present disclosure relates to a method for producing a resin composition molded body.

BACKGROUND ART

Wood resin composition molded bodies having a cellulose-based material powder such as a wood powder dispersed into resin are also called wood plastics, and have a texture close to that of wood and also advantages such as resistance to decay, cracking, and splintering, and being lightweight compared to wood. Because of this, wood resin composition molded bodies have been widely used as materials for e.g. building materials. It has been investigated to use a low melting point resin such as polypropylene derived from a waste as the resin for wood resin composition molded bodies (see e.g. Patent Document 1 and Non-Patent Document 1).

The utilization of a plastic waste including a waste plastic as a resin raw material for resin composition molded bodies has been investigated. In a method for producing a resin composition molded body including slag, for example, the use of a high melting point plastic and a low melting point plastic classified from two or more plastic wastes which are different from each other has been investigated (Patent Document 2). It has been also investigated to mix and mold pulverized material obtained from a mixture of plastic wastes with a binder including a plastic, and utilize it as a molded body.

Citation List

Patent Document

   Patent Document 1: Japanese Unexamined Patent Application, Publication No. 2001-353707
   Patent Document 2: Korean Patent Application No. 10-2022-0002779
   Patent Document 3: Japanese Unexamined Patent Application, Publication No. H7-227849

Non-Patent Document

Non-Patent Document 1: Flowchart of plastic products, plastic waste and resource recovery 2020, Plastic Waste Management Institute,
https://www.pwmi.or.jp/flow_pdf/flow2020.pdf

DISCLOSURE OF THE INVENTION

Problems to be Solved by the Invention

It is desired to utilize a plastic waste which includes a waste plastic as a resin raw material for a resin composition molded body from the viewpoint of promoting resource circulation and largely contributing to the reduction of $CO_2$ emissions generated by waste incineration. However, it has been common in the past that from the plastic waste, a low melting point resin which is easily thermally molded only is separated and recovered, and used. The separated and recovered low melting point resin can be thermally molded and is thus used as recycled resin for material recycling. In waste plastic residues which remain after separating and recovering the low melting point resin, meanwhile, the ratio of a non-low melting point resin such as a high melting point resin or a thermosetting resin increases, and thermal molding becomes difficult. Because of this, utilization other than thermal recycling is difficult for waste plastic residues. Therefore, the material recycling rate of plastic waste is low in Japan. In recent years, a demand to increase the material recycling rate of plastic waste has increased. However, according to investigations by the present inventors, there is a problem in that the mixed ratio of a low melting point resin and a non-low melting point resin contained in the plastic waste varies depending on generation sites and generation times of the plastic waste. When the mixed ratio of the low melting point resin and the non-low melting point resin contained in the plastic waste varies, it is difficult to stably produce a resin composition molded body by thermal molding. However, operation to separate the plastic waste into the low melting point resin and the non-low melting point resin is complicated and equipment for the separation is needed.

An object of the present disclosure is to provide a method for producing a resin composition molded body, in which a plastic waste including a low melting point resin and a non-low melting point resin can be effectively utilized as a molding

2

raw material without being separated into the low melting point resin and the non-low melting point resin even when the mixed ratio of the resins (low melting point resin and non-low melting point resin) varies.

Means for Solving the Problems

The present disclosure relates to a method for producing a resin composition molded body, including preparing a plastic waste which includes a low melting point resin with a melting point in a range of 80°C or higher and lower than 190°C and a non-low melting point resin which is a high melting point resin with a melting point of 190°C or higher or a thermosetting resin, pulverizing the plastic waste to obtain a resin composition powder, adding at least one of a low melting point resin-containing powder or a non-low melting point resin-containing powder prepared in advance to the resin composition powder and mixing the obtained mixture to obtain a resin composition powder mixture adjusted so that the ratio of the amount of the low melting point resin to the amount of the non-low melting point resin is in a predetermined range, and molding the resin composition powder mixture to obtain a resin composition molded body.

BRIEF DESCRIPTION OF THE DRAWINGS

Fig. 1 is a block diagram of a system for producing a resin composition molded body which can be used in a method for producing a resin composition molded body according to one embodiment of the present disclosure;
Fig. 2 is a flow diagram of a method for producing a resin composition molded body according to one embodiment of the present disclosure; and
Fig. 3 is a fountain flow model in a mold which can be used for a method for producing a resin composition molded body according to one embodiment of the present disclosure.

PREFERRED MODE FOR CARRYING OUT THE INVENTION

The embodiment of the present disclosure will now be described in detail with reference to the drawings. It should be noted that using, as an example, a wood resin composition molded body including a wood powder as a resin composition molded body, the method for producing it will be described in the present embodiment below.

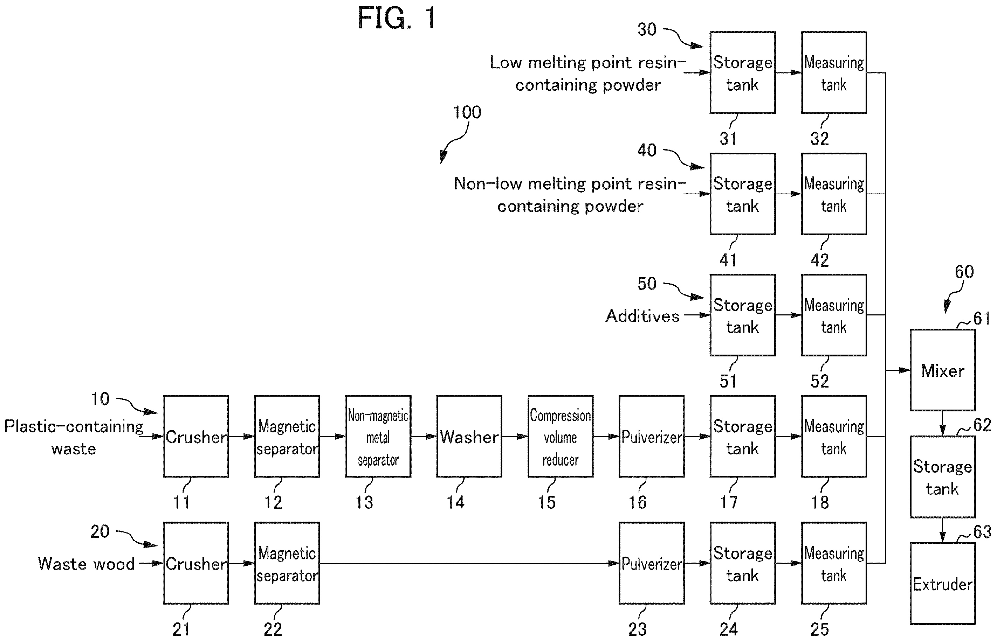

Fig. 1 is a block diagram of a system for producing a resin composition molded body which can be used in a method for producing a resin composition molded body according to one embodiment of the present disclosure. As shown in Fig. 1, a resin composition molded body producing system 100 includes a resin composition powder feeding unit 10, a wood powder feeding unit 20, a low melting point resin powder feeding unit 30, a non-low melting point resin powder feeding unit 40, an additive feeding unit 50 and a molded body producing unit 60.

The resin composition powder feeding unit 10 produces a resin composition powder for producing a resin composition molded body from a plastic waste and stores the powder. The resin composition powder feeding unit 10 has a plastic waste crusher 11, a magnetic separator 12, a non-magnetic metal separator 13, a washer 14, a compression volume reducer 15, a pulverizer 16, a storage tank 17 and a measuring tank 18.

The plastic waste includes a low melting point resin with a melting point in a range of 80°C or higher and lower than 190°C, and a non-low melting point resin which is one of a high melting point resin with a melting point of 190°C or higher and a thermosetting resin or a mixture of both the resins. The plastic waste may include a substance other than synthetic resin. The substance other than synthetic resin may be an inorganic substance or an organic substance. Examples of the inorganic substance include magnetic substances, non-magnetic metals, glass, pebbles, metals, shellfish and sand, as well as drying materials such as silica gel and an iron-based oxygen scavenger. Examples of the magnetic substance can include iron, cobalt and nickel. Examples of the non-magnetic metal can include aluminum. Examples of the organic substance are oil and fat, food residues and surfactants.

Examples of the low melting point resin can include polystyrene (PS), acrylonitrile-butadiene-styrene resin (ABS), polyethylene (PE), polymethyl methacrylate (PMMA), polycarbonate (PC), polypropylene (PP), polyamide 12 (PA12) and polyacetal (POM). The melting point of the high melting point resin may be 340°C or lower. Examples of the high melting point resin can include polyethylene terephthalate (PET), polyamide 6 (PA6), polybutylene terephthalate (PBT), polyphenylene sulfide (PPS) and polyether ether ketone (PEEK). The thermosetting resin means a resin after curing. Examples of the thermosetting resin can include polyimide (PI), polyurethane (PU) and phenol formaldehyde resin (PF). The low melting point resin and non-low melting point resin may be each contained individually or two or more of each of the resins may be contained in the plastic waste.

The plastic waste is, for example, any one of wastes including a waste plastic derived from general waste, a waste plastic derived from industrial waste and a waste plastic derived from marine plastic waste or a mixture of two or more of them. The plastic means a molded product of synthetic resin. The plastic waste, for example, is a waste including 50 mass% or more of a waste plastic. The amount of the waste plastic in the plastic waste may be, for example, in a range of 50 mass% or more and 100 mass% or less, a range of 50 mass% or more and 99.5 mass% or less or a range of 50 mass% or more and 70 mass% or less.

The ignition residue of the plastic waste may be in a range of 0.5 mass% or more and 10 mass% or less. The ignition residue is a value measured, for example, by a method below.

(Method for measuring ignition residue)

The weight of a sample before heating is measured with the sample put in a crucible. It is retained using a high temperature electric furnace at 600°C after 2 hours to completely burn organic components including synthetic resin. After allowing it to cool, the ignition residue is obtained as a percentage by dividing the weight of the remaining sample by the weight before heating.

The general waste is a waste except for industrial waste and marine plastic waste and includes domestic waste discarded by general households. Examples of the waste plastic derived from general waste can include plastics used as product containers and packaging materials. The waste plastic derived from general waste may be waste plastic residues. The waste plastic residues are residues after separating and recovering some of resins contained in the waste plastic derived from general waste and are, for example, residues after separating and recovering some of the low melting point resin. The low melting point resin separated and recovered includes, for example, at least any one of PP, PE and PS and may include PP and PE. The waste plastic residues may be residues after separating and recovering the low melting point resin contained in the waste plastic in an amount of 5 mass% or more, or 5 mass% or more and 95 mass% or less, or 5 mass% or more and 50 mass% or less, or 5 mass% or more and 15 mass% or less. It should be noted that the proportion of the sum of PP and PE among the separated and recovered low melting point resins may be 20 mass% or more, or in a range of 50 mass% or more and 100 mass% or less, or a range of 70 mass% or more and 100 mass% or less.

The waste plastic derived from industrial waste is a waste plastic generated with business activities. Examples of the waste plastic derived from industrial waste can include nonconforming products and surplus products. The waste plastic derived from marine plastic waste is a waste plastic accumulated in the ocean because plastic products are directly discarded in the sea or plastic products discarded on land drift to the sea via rivers and lakes. The plastic products are, for example, vinyl pieces, plastic bottles and fishing tools. The waste plastic derived from marine plastic waste includes, for example, microplastics in which the size of plastic products is reduced to 5 mm or less by deterioration due to influence of waves and UV rays.

The amounts of the low melting point resin and the non-low melting point resin in synthetic resin contained in the plastic waste are not particularly restricted. The amount of the low melting point resin may be, for example, in a range of 3 mass% or more and 95 mass% or less. The amount of the non-low melting point resin may be, for example, in a range of 5 mass% or more and 97 mass% or less. The ratio of the amounts of the low melting point resin to the non-low melting point resin (the ratio of the amounts of the low melting point resin/the non-low melting point resin) may be, for example, in a range of 1/3 or more and 5.00 or less in mass ratio. The amount of the low melting point resin may be 80 mass% or less, or 70 mass% or less. The amount of the low melting point resin may be in any range of 5 mass% or more and 80 mass% or less, 25 mass% or more and 80 mass% or less, 25 mass% or more and 75 mass% or less and 30 mass% or more and 70 mass% or less. The amount of the non-low melting point resin may be 20 mass% or more, or 30 mass% or more. The amount of the low melting point resin may be in any range of 20 mass% or more and 95 mass% or less, 20 mass% or more and 75 mass% or less, 25 mass% or more and 75 mass% or less and 30 mass% or more and 70 mass% or less. The ratio of the amounts of the low melting point resin/the non-low melting point resin may be less than 4.00 or in a range of 1/3 or more and 3.00 or less in mass ratio.

When the plastic waste is waste plastic residues, the amount of the low melting point resin in synthetic resin contained in the waste plastic residues may be, for example, 95 mass% or less, or for example in a range of 25 mass% or more and 95 mass% or less, or a range of 35 mass% or more and 90 mass% or less. The total amount of PE, PP and PS in synthetic resin contained in the waste plastic residues may be 80 mass% or less or 70 mass% or less. The total amount of PE, PP and PS may be in any range of 5 mass% or more and 80 mass% or less, 25 mass% or more and 80 mass% or less, 25 mass% or more and 75 mass% or less and 30 mass% or more and 70 mass% or less. The total amount of PE and PP to the whole amount of the low melting point resin may be 90 mass% or less or in a range of 20 mass% or more and 80 mass% or less. The amount of the non-low melting point resin in the above-described synthetic resin may be, for example, 5 mass% or more, or in a range of 5 mass% or more and 75 mass% or less or a range of 10 mass% or more and 65 mass% or less. The ratio of the amounts of the low melting point resin to the non-low melting point resin in the above-described synthetic resin (the ratio of the amounts of the low melting point resin/the non-low melting point resin) may be, for example, in a range of 1/3 or more and 5.00 or less or a range of 0.71 or more and 3.00 or less in mass ratio. The ratio of the amounts of the low melting point resin/the non-low melting point resin may be less than 4.00 or in a range of 1/3 or more and 3.00 or less in mass ratio. The ratio of the amounts of the thermosetting resin to the high melting point resin contained in the non-low melting point resin in the above-described synthetic resin (thermosetting resin/high melting point resin) may be, for example, in a range of 0.01 or more and 100 or less or a range of 0.05 or more and 50 or less in mass ratio. The amount of the thermosetting resin in the above-described synthetic resin may be, for example, 0 mass% or more or in a range of 1 mass% or more and 10 mass% or less. The amount of the high melting point resin in the above-described synthetic resin may be, for example, 5 mass% or more or in a range of 10 mass% or more and 90 mass% or less.

The form of the plastic waste is not particularly restricted and may be, for example, a veil or mass shape. When production units (lot) for the resin composition molded body are separated depending on the type of plastic waste, the plastic waste used in the production units may be different in generation places and generation times. In the plastic waste used in each production unit, for example, the standard deviation of the amount of the low melting point resin may be 1 mass% or more, or in a range of 1 mass% or more and 23 mass% or less or a range of 2 mass% or more and 12 mass% or less.

The crusher 11 is a device for crushing the plastic waste to obtain plastic pieces. As the crusher 11, for example, a uniaxial crusher can be used. The size of the plastic pieces obtained by the crusher 11 is not particularly restricted and may be, for example, a size which passes through a sieve with an aperture size of 20 to 50 mm. The aperture size of the sieve may be 50 mm, 40 mm or 30 mm.

The magnetic separator 12 is a device for removing and recovering magnetic substances contained in the plastic pieces. As the magnetic separator 12, for example, a hanging type magnetic separator, a pulley type magnetic separator, a drum type magnetic separator and a roll type magnetic separator can be used. Examples of the magnetic substances can include iron, stainless steel and ferrite. The magnetic separator 12 may be used individually or two or more of the magnetic separators may be used in combination.

The non-magnetic metal separator 13 is a device for removing and recovering non-magnetic metal contained in the plastic pieces. Examples of the non-magnetic metal can include aluminum, copper, zinc and brass. As the non-magnetic metal separator 13, an eddy current separator can be used.

The washer 14 is a device for washing and removing attached material such as detergents, food stains and oil stains attached to the plastic pieces. As the washer 14, a wet pulverizer washer having a pulverizing function can be used. The wet pulverizer washer may pulverize plastic pieces in water. As the function of pulverizing plastic pieces, a pulverizer which has stationary blades and rotary blades and pulverizes plastic pieces with the pieces put between the stationary blades and the rotary blades can be used. Attached material to coarse plastic particles can be more efficiently removed by pulverizing the plastic pieces using the wet pulverizer washer to obtain coarse plastic particles and simultaneously washing them.

The compression volume reducer 15 is a device for compressing coarse plastic particles to remove moisture attached to coarse plastic particles and simultaneously to reduce the volume to obtain a coarse plastic powder. As the compression volume reducer 15, a screw type compression volume reducer having a screw in a barrel with a drain hole can be used. By using the screw type compression volume reducer, moisture is removed by frictional heat among the screw, the barrel and the coarse plastic particles, and also some of the low melting point resin in the coarse plastic particles is melted and the coarse plastic particles are fused with each other to reduce the volume of coarse plastic particles.

The pulverizer 16 is a device for pulverizing the coarse plastic powder to generate a fine resin composition powder. As the pulverizer 16, a fine pulverizer (cutter mill), a hammer mill and a pin mill can be used. The fine pulverizer (cutter mill) is a device which has stationary blades and rotary blades and pulverizes the plastic pieces with the pieces put between the stationary blades and the rotary blades. The pulverizer 16 may be used individually or two or more of the pulverizers may be used in combination.

A sieve may be placed at the outlet of the pulverizer 16 for the resin composition powder. The pulverizer 16 may be formed for example so that the coarse plastic powder with a coarse size remains inside the pulverizer 16 and only a fine resin composition powder passing through the sieve is ejected to the outside. As the sieve, for example, a sieve with an aperture size of 1 to 3 mm can be used. The aperture size of the sieve may be 3 mm, 2 mm or 1 mm. When the aperture size of the sieve is, for example, 500 $\mu$m or less, there is a risk that the pulverized low melting point resin may be melted by heat generated by pulverizing the coarse plastic powder and the molten resin may be solidified on the surface of the sieve and thus sieve clogging may easily occur.

The storage tank 17 is a tank to temporarily store the resin composition powder generated by the pulverizer 16. In addition, the measuring tank 18 is a tank to measure the resin composition powder fed from the storage tank 17 and temporarily store a predetermined amount of the resin composition powder.

The resin composition powder feeding unit 10 can produce the resin composition powder from the plastic waste, for example, by a method including a crushing step, a magnetic substance removing step, a non-magnetic metal removing step, a water washing step, a volume reduction step and a pulverization step.

The crushing step is crushing the plastic waste to obtain plastic pieces. The crushing step is carried out using the crusher 11.

The magnetic substance removing step is removing and recovering magnetic substances contained in the plastic pieces. The magnetic substance removing step is carried out using the magnetic separator 12. By the magnetic substance removing step, magnetic substances contaminating the plastic pieces can be certainly removed. By removing the magnetic substances, an adverse effect can be prevented, in which the magnetic substances remain inside the pulverizer and cause wear and defects of blades inside the pulverizer to gradually reduce pulverization efficiency of the pulverizer in the pulverization step. By carrying out the magnetic substance removing step after crushing the plastic waste into plastic pieces in the crushing step, molded bodies such as push pumps used in hand soap and shampoo containers are also crushed, and thus metal magnetic substances such as spring materials and screw materials used in the molded bodies can be more certainly removed.

The non-magnetic metal removing step is removing and recovering non-magnetic metal contained in the plastic pieces. The non-magnetic metal removing step is carried out using the non-magnetic metal separator 13.

The water washing step is washing and removing attached material to the plastic pieces by washing the attached material to the plastic pieces (particularly organic substances) with water. In the water washing step S14, the plastic pieces may be pulverized into coarse plastic particles and simultaneously the attached material to the coarse plastic particles may be washed and removed. The water washing step is carried out using the washer 14. By the water washing step, an adverse effect can be prevented, in which organic substances such as detergents, food stains and oil stains are melted and attach to blades inside the pulverizer to reduce pulverization efficiency and organic substances are melted and attach to the sieve of the pulverizer to cause sieve clogging in the pulverization step. In the resin composition powder obtained, the amount of contaminating organic substances is reduced and thus microorganisms are not easily proliferated.

The volume reduction step is removing moisture attached to the coarse plastic particles and also reducing the volume to obtain the coarse plastic powder. The volume reduction step is carried out using the compression volume reducer 15.

The pulverization step is pulverizing the coarse plastic powder to obtain the resin composition powder. In the method for producing a resin composition powder of the present embodiment, the low melting point resin and the non-low melting point resin contained in the plastic waste are not separated and are pulverized at the same time in the pulverization step. The pulverization step is carried out using the pulverizer 16. The resin composition powder obtained by pulverization is fed to the storage tank 17.

In the case of a veil or mass-shaped plastic waste, the veil or mass-shaped plastic waste may be disintegrated using a disintegrator before the crushing step. In addition, the plastic waste can be contaminated with a variety of rough magnetic wastes such as batteries, cigarette lighters, spray cans, razors and needles. Therefore, the rough magnetic wastes may be removed and recovered using a magnetic separator before the crushing step.

The wood powder feeding unit 20 produces a wood powder used as a raw material for the resin composition molded body from waste wood and stores the powder. The wood powder feeding unit 20 has a crusher 21, a magnetic separator 22, a pulverizer 23, a storage tank 24 and a measuring tank 25.

As waste wood, for example, waste construction wood, thinned wood and sawdust can be used.

The crusher 21 is a device for crushing waste wood to obtain wood chips. As the crusher 21, for example, a uniaxial pulverizer can be used. The size of wood chips obtained by the crusher 21 is not particularly restricted and may be, for example, a size which passes through a sieve with an aperture size of 20 to 50 mm. The aperture size of the sieve may be 50 mm, 40 mm or 30 mm.

The magnetic separator 22 is a device for removing and recovering magnetic substances contained in the wood chips. As the magnetic separator 22, for example, a hanging type magnetic separator, a pulley type magnetic separator, a drum type magnetic separator and a roll type magnetic separator can be used. Examples of the magnetic substances can include nails and bolts. The magnetic separator 12 may be used individually or two or more of the magnetic separators may be used in combination.

The pulverizer 23 is a device for pulverizing the wood chips to generate a fine wood powder. As the pulverizer 23, a fine pulverizer (cutter mill), a hammer mill and a pin mill can be used. The pulverizer 23 may be used individually or two or more of the pulverizers may be used in combination.

A sieve may be placed at the outlet of the pulverizer 23 for the wood powder. The pulverizer 16 may be formed for example so that the coarse plastic powder with a coarse size remains inside the pulverizer 16 and only a fine resin composition powder passing through the sieve is ejected to the outside. As the sieve, a sieve with an aperture size of 300 $\mu$m to 3 mm, for example, can be used. The aperture size of the sieve may be 2 mm, 1 mm or 500 $\mu$m.

The particle size of the wood powder is not particularly limited and the percentage of particles with a longer diameter of 3.0 mm or more may be 35% by number or less or 20% by number or less of particles with a longer diameter of 1.0 mm or more. In addition, the percentage of particles with a longer diameter of less than 2.0 mm may be 30% by number or more or 50% by number or less. The percentage of these particles can be found by observing the cross-section of a resin composition molded body 10 using an optical microscope and measuring the particle diameter of the wood powder.

The storage tank 24 is a tank to temporarily store the wood powder generated in the pulverizer 23. In addition, the measuring tank 25 is a tank to measure the wood powder fed from the storage tank 24 and temporarily store a predetermined amount of the wood powder.

The low melting point resin powder feeding unit 30 stores a low melting point resin powder used as a raw material for the resin composition molded body as needed. The low melting point resin powder feeding unit 30 has a storage tank 31 and a measuring tank 32.

The low melting point resin powder is a powder including a resin with a melting point equal to or higher than the melting point of the low melting point resin contained in the plastic waste. The low melting point resin powder includes a low melting point resin. Examples of the low melting point resin are PS, ABS, PE, PMMA, PC, PP, PA12 and POM. The low melting point resin may be used individually or two or more of them may be used in combination. When including a plurality of low melting point resins, the melting point of the low melting point resin means the lowest temperature of the melting points of the plurality of low melting point resins. The low melting point resin powder may include a non-low melting point resin. The amount of the low melting point resin in the low melting point resin powder may be, for example, 60 mass% or more, or 80 mass% or more. The low melting point resin powder may be a powder obtained by pulverizing a plastic waste including 60 mass% or more of the low melting point resin. The low melting point resin powder may be a powder which passes through a sieve with an aperture size of 3 mm. As the low melting point resin powder, for example, a powder obtained by pulverizing a waste such as a shrink film (PE), a cable tie (PP) and foamed polystyrol (PS) after used for product packaging, binding and curing into 3 mm or less can be used. In addition, a powder obtained by pulverizing recycled plastics (PP, PE and PS) recovered and produced based on the Containers and Packaging Recycling Law into 3 mm or less can be also used.

The storage tank 31 is a tank to temporarily store the low melting point resin powder. In addition, the measuring tank 32 is a tank to measure the low melting point resin powder fed from the storage tank 31 and temporarily store a predetermined amount of the low melting point resin powder.

The non-low melting point resin powder feeding unit 40 stores a non-low melting point resin powder used as a raw material for the resin composition molded body as needed. The non-low melting point resin powder feeding unit 40 has a storage tank 41 and a measuring tank 42.

The non-low melting point resin powder is a powder including a resin with a melting point equal to or higher than the melting point of the low melting point resin contained in the plastic waste. The non-low melting point resin powder includes a non-low melting point resin. Examples of the non-low melting point resin are PET, PA6, PBT, PPS, PEEK, PI, PU and PF. The non-low melting point resin may be used individually or two or more of them may be used in combination. When including a plurality of non-low melting point resins, the melting point of the non-low melting point resin means the lowest temperature of the melting points of the plurality of non-low melting point resins. The non-low melting point resin powder may include a non-low melting point resin. The amount of the non-low melting point resin in the non-low melting point resin powder may be, for example, 60 mass% or more, or 80 mass% or more. The non-low melting point resin powder may be a powder obtained by pulverizing a plastic waste including 60 mass% or more of the non-low melting point resin. The non-low melting point resin powder may be a powder which passes through a sieve with an aperture size of 3 mm. As the non-low melting point resin powder, for example, a recycled raw material such as a powder obtained by pulverizing a waste such as PET used as containers for egg sales and food packaging materials into 3 mm or less can be used.

The storage tank 41 is a tank to temporarily store the non-low melting point resin powder. In addition, the measuring tank 42 is a tank to measure the non-low melting point resin powder fed from the storage tank 41 and temporarily store a predetermined amount of the non-low melting point resin powder.

The additive feeding unit 50 stores additives optionally added to the resin composition molded body. The additive feeding unit 50 has a storage tank 51 and a measuring tank 52.

As the additives, for example, various additives which have been applied to conventional resin composition molded bodies such as a pigment, a compatibilizing agent to improve an affinity between a resin and a wood powder, a filler, a lubricant, a weathering agent, a heat stabilizer, a foaming agent and an antistatic agent can be used. The pigment is used to color the resin composition molded body. As the pigment, an inorganic-based pigment, an organic-based pigment and a mixture thereof can be used. The compatibilizing agent is used to increase adhesion between the wood powder and resin components to improve strength properties and water resistance of the resin composition molded body. As the compatibilizing agent, a maleic anhydride-modified polypropylene-based compatibilizing agent can be used. The lubricant is added to improve slipperiness with a mold. As the lubricant, oxidized polyolefin wax, acid-modified polyolefin wax, calcium stearate and zinc stearate can be used. As the weathering material, an ultraviolet absorber (UVA), a light absorber (HALS) and an antioxidant can be used.

The storage tank 51 is a tank to temporarily store additives. In addition, the measuring tank 52 is a tank to measure additives fed from the storage tank 51 and temporarily store a predetermined amount of additives. The storage tank 51 and the measuring tank 52 may be placed one for each additive or one for a mixture of additives obtained by mixing two or more additives.

The molded body producing unit 60 produces the resin composition molded body. The molded body producing unit 60 has a mixer 61, a storage tank 62 and an extruder 63.

The mixer 61 is a device for obtaining a raw material mixture by mixing the resin composition powder, at least one of a low melting point resin-containing powder or a non-low melting point resin-containing powder, the wood powder and additives, which are raw materials for the resin composition molded body. As the mixer 61, for example, a heater mixer can be used. A mixture in which raw materials are uniformly dispersed can be obtained by mixing the above raw materials while heating using a heater mixer. The heating temperature of the heater mixer varies depending on resins contained in the raw material mixture and may be, for example, in a range of 100 to 150°C when the resin having the lowest melting point is PE.

The storage tank 62 is a tank to temporarily store the raw material mixture. The storage tank 62 feeds a predetermined amount of the raw material mixture into the extruder 63.

The extruder 63 is a device for molding the raw material mixture into a predetermined shape. As the extruder 63, for example, a single screw extruder and a twin screw extruder can be used. The molding temperature of the extruder 63 varies depending on factors such as the type and amount of the low melting point resin contained in the raw material mixture and is, for example, 150°C or higher when PE is contained. Meanwhile, the wood powder can be decomposed at 190°C or higher and gasified to generate voids in the resin composition molded body, and therefore the molding temperature is preferably lower than 190°C.

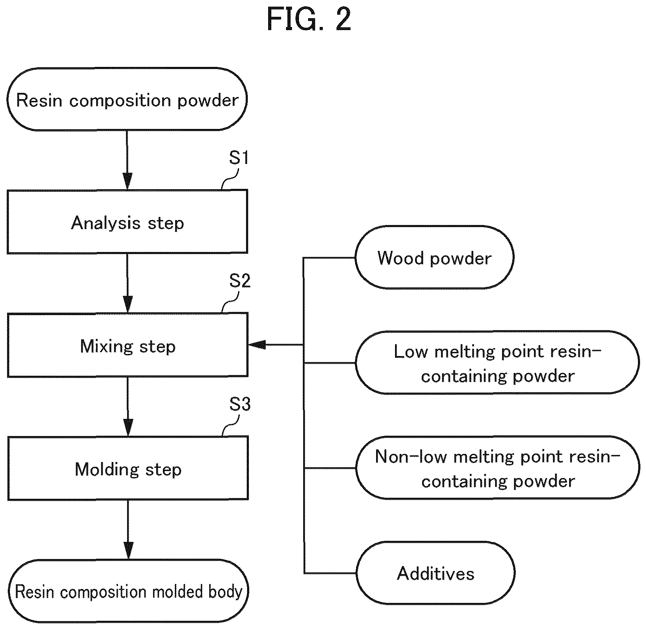

The method for producing a resin composition molded body using the resin composition molded body producing system 100 will now be described. Fig. 2 is a flow diagram of a method for producing a resin composition molded body according to one embodiment of the present disclosure. The method for producing a resin composition molded body of the present embodiment includes an analysis step S1, a mixing step S2 and a molding step S3.

The analysis step S1 is analyzing the composition of the resin composition powder. As the composition of the resin composition powder, the ratio of the amount of the low melting point resin to the amount of the non-low melting point resin in the resin composition powder can be used. The resin composition powder (sample powder) for analysis may be, for example, the resin composition powder stored in the storage tank 17 in the resin composition powder feeding unit 10.

For the analysis of the amount of the low melting point resin and the amount of the non-low melting point resin in the resin composition powder, for example, a method can be used, including separating the low melting point resin and the non-low melting point resin using differences in specific gravity between the resins and measuring the amount of each of the separated resins. In the present embodiment, an analysis was carried out as follows.

The resin composition powder is soaked as the sample powder in a heavy liquid. Next, the amount of floating material at the surface of the heavy liquid and the amount of sediment are measured. The floating material is skimmed from the heavy liquid. The sediment is recovered by filtering the heavy liquid after skimming the whole amount of the floating material. The recovered floating material and sediment are washed with water and then dried, and the amounts of the floating material and sediment are measured. Then, the amount of the floating material is used as the amount of the low melting point resin, and the amount of the sediment is used as the amount of the non-low melting point resin. The specific gravity of the heavy liquid can be, for example, 1.08 to 1.13. The heavy liquid may be, for example, an organic solvent such as ethylene glycol or an aqueous solution of an inorganic salt such as an aqueous solution of sodium chloride. In order to prevent the sample powder from floating due to buoyancy, the particle diameter of the sample powder may be 3 mm or less. In addition, when air foam attaches to the sample powder, there is a possibility that the resin powder which should be settled in the heavy liquid will float. The attachment of air foam can be suppressed by stirring under appropriate conditions or adding e.g. a surfactant to the heavy liquid, and thus analysis accuracy can be improved.

The mixing step S2 is mixing the resin composition powder, at least one of the low melting point resin-containing powder or the non-low melting point resin-containing powder, the wood powder and additives to obtain a raw material mixture. The mixing step S2 is carried out by mixing raw materials fed from the measuring tanks 18, 25, 32, 42 and 52 using the mixer 61. The obtained raw material mixture is fed to the storage tank 62.

In the mixing step S2, the mixing ratio of the resin composition powder and the low melting point resin-containing powder and/or the non-low melting point resin-containing powder is adjusted based on the ratio of the amount of the low melting point resin to the amount of the non-low melting point resin in the resin composition powder obtained in the analysis step S1. The total amount of the low melting point resin and the non-low melting point resin in the raw material mixture obtained in the mixing step S2 may be, for example, in a range of 50 to 90 mass%. The amount of the wood powder may be, for example, in a range of 5 to 40 mass%. The amount of additives may be, for example, in a range of 5 to 40 mass%. The ratio of the amount of wood powder to the amount of the low melting point resin (the ratio of the amounts of the wood powder/the low melting point resin) may be 5.0 or less. In addition, the ratio of the amount of the low melting point resin to the amount of the non-low melting point resin in the resin composition powder mixture may be in a range of 1/3 to 5 or a range of 1/3 to 1.40 in mass ratio.

The molding step S3 is molding the raw material mixture obtained in the mixing step S2 to obtain a wood resin composition molded body. The molding step S3 is carried out by extrusion molding of the raw material mixture fed from the storage tank 62 using the extruder 63. The low melting point resin in the resin composition powder is melted by extrusion molding, and thus a wood resin composition molded body in which the non-low melting point resin and the wood powder are dispersed in the low melting point resin can be obtained. The shape of the wood resin composition molded body is not particularly restricted and may be, for example, a plate-shaped formed body.

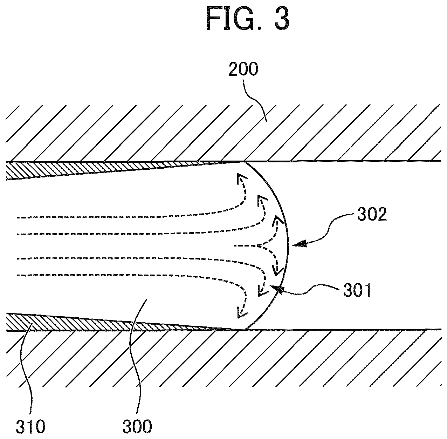

Fig. 3 is a fountain flow model in a mold which can be used for a method for producing a resin composition molded body according to one embodiment of the present disclosure. As shown in Fig. 3, a molten material 300 of the raw material powder mixture flowing in the mold 200 forms a fountain flow 301, flows from a flow front 302 to the inner surface of the mold 200 and solidifies to form a skin layer 310. The flow rate of the molten material 300 in the mold 200 is different between the central part and the vicinity of the inner surface of the mold 200. A difference in the flow rate of the molten material 300 in the mold 200 varies depending on conditions such as the viscosity of the molten material 300 and slipperiness between the mold 200 and the molten material 300. When the difference in the flow rate of the molten material 300 is greater, it is more difficult to uniformly discharge the molten material 300 from the mold 200, and consequently a defect is easily caused in the shape of a molded body obtained. In particular, in the case of profile extrusion of e.g. sashes (the cross-sectional shape is complicated and the thickness varies), warp generation and the deterioration of accuracy of cross-sectional dimensions are caused.

The viscosity of the molten material 300 largely varies depending on the component ratio of the low melting point resin and the non-low melting point resin. In the present embodiment, the viscosity of the molten material 300 can be stably maintained because the proportion of the low melting point resin and the non-low melting point resin in the resin composition powder is grasped in the analysis step S1 and the amounts of the low melting point resin and the non-low melting point resin are adjusted to an appropriate component proportion in the mixing step S2. Because of this, moldability at the time of extrusion can be improved. Therefore, a plastic waste can be also applied to the shape of e.g. a sash, which is difficult to mold, and moreover development of effective utilization of the plastic waste can be widened.

In the molding step S3, the molding temperature of the raw material mixture is preferably lower than a temperature that is lower than the melting point of the non-low melting point resin contained in the raw material mixture by 10°C. When the melting point of the non-low melting point resin is 250°C, for example, the molding temperature is preferably lower than 240°C. When the non-low melting point resin is not melted and remains in an unmelted state in the wood resin composition molded body, the non-low melting point resin is dispersed in the form of islands in the molded body and behaves like a filler. Because the non-low melting point resin has a higher elastic modulus than the low melting point resin, the non-low melting point resin can reinforce the low melting point resin in the form of sea having a lower elastic modulus by dispersion in the form of islands. Because of this, high elasticity and high strength are obtained as the whole resin composition molded body. In addition, when the molding temperature is 200°C or higher in a system having a wood powder added thereto, the wood powder can be carbonized and thus molding is desirably carried out at 190°C or lower. The molding temperature of the raw material mixture is preferably not lower than a temperature that is higher than the melting point of the low melting point resin by 5 to 10°C. The molding temperature of the raw material mixture may be, for example, in a range of 160°C or higher and 190°C or lower. It should be noted that the melting point of the non-low melting point resin means the lowest temperature of the melting points of a plurality of non-low melting point resins contained in the raw material mixture. The melting point of the low melting point resin indicates the highest temperature of the melting points of a plurality of low melting point resins contained in the raw material mixture.

From the viewpoint of improving the elasticity and strength of the resin composition molded body, the resin composition powder is preferably a fine powder and more preferably a powder which passes through a sieve with an aperture size of 1 mm.

The resin composition formed body obtained as described above includes a wood powder and has a texture close to that of wood and thus can be used as a replacement for wood. The resin composition formed body can be used as, for example, construction materials, building materials and gardening materials. Examples of the construction materials include paving materials. Examples of the building materials can include floor materials, particularly bathroom floor materials, roof materials, wall materials, handrails, sashes, wood decks, fences and the like. Examples of the gardening materials can include flower beds.

The method for producing a resin composition molded body of the present embodiment having the structure as described above includes adding at least one of the low melting point resin-containing powder or the non-low melting point resin-containing powder prepared in advance to the resin composition powder derived from the plastic waste and mixing the obtained mixture, and molding a resin composition powder mixture adjusted so that the ratio of the amount of the low melting point resin to the amount of the non-low melting point resin is in a predetermined range to obtain a resin composition molded body. Therefore, even when the mixed ratio of the low melting point resin and the non-low melting point resin contained in the plastic waste varies, a resin composition molded body can be stably produced using the plastic waste as a molding raw material without being separated into the low melting point resin and the non-low melting point resin. Therefore, according to the present embodiment, it is possible to provide a method for producing a resin composition molded body, which can effectively utilize a plastic waste having an unknown mixed ratio of resins (low melting point resin and non-low melting point resin).

In the method for producing a resin composition molded body of the present embodiment, the amounts of the low melting point resin and the non-low melting point resin in the resin composition powder are measured in the analysis step S1, and the amounts of the low melting point resin-containing powder and the non-low melting point resin-containing powder added to the resin composition powder are adjusted based on the obtained measurement values of the amounts, and thus a resin composition molded body can be more stably produced.

In the method for producing a resin composition molded body of the present embodiment, as the method for measuring the amounts of the low melting point resin and the non-low melting point resin in the resin composition powder in the analysis step S1, a method including soaking a sample powder (resin composition powder) in a heavy liquid, measuring the amount of floating material at the surface of the heavy liquid and the amount of sediment, and using the amount of the floating material as the amount of the low melting point resin and the amount of the sediment as the amount of the non-low melting point resin is used so that the amounts of the low melting point resin and the non-low melting point resin can be quickly and accurately measured. Furthermore, when the specific gravity of the heavy liquid is 1.08 to 1.13, the amounts of the low melting point resin and the non-low melting point resin can be more accurately measured.

In the method for producing a resin composition molded body of the present embodiment, when the amounts of the low melting point resin-containing powder and the non-low melting point resin-containing powder added to the resin composition powder derived from the plastic waste are adjusted so that the ratio of the amount of the low melting point resin to the amount of the non-low melting point resin contained in the resin composition powder mixture is in a range of 1/3 to 5 in mass ratio in the mixing step S2, damage does not easily occur at the time of molding and a resin composition molded body with excellent water resistance can be obtained.

In the method for producing a resin composition molded body of the present embodiment, when the resin composition powder derived from the plastic waste is a powder which passes through a sieve with an aperture size of 3 mm, the non-low melting point resin is fine, and thus the non-low melting point resin can be coated with molten material of the low melting point resin in the production of the resin composition molded body. Therefore, the water resistance of the resin composition molded body obtained is further improved.

In the method for producing a resin composition molded body of the present embodiment, when the low melting point resin-containing powder added to the resin composition powder derived from the plastic waste contains 60 mass% or more of the low melting point resin, the amount of the low melting point resin in the low melting point resin-containing powder is high, and thus, the amount of the low melting point resin-containing powder added can be easily adjusted when the amount of the low melting point resin in the resin composition powder is small. In addition, in the method for producing a resin composition molded body of the present embodiment, when the non-low melting point resin-containing powder added to the resin composition powder derived from the plastic waste contains 60 mass% or more of the non-low melting point resin, the amount of the non-low melting point resin in the non-low melting point resin-containing powder is high, and thus, the amount of the non-low melting point resin-containing powder added can be easily adjusted when the amount of the non-low melting point resin in the resin composition powder is small.

In the method for producing a resin composition molded body of the present embodiment, a resin composition molded body having a texture close to that of wood can be obtained by adding a wood powder to the resin composition powder derived from the plastic waste and mixing the obtained mixture to obtain a wood powder-containing resin composition powder mixture and molding the wood powder-containing resin composition powder mixture. A cellulose-based material powder such as pulp powder can be used in place of the wood powder.

The embodiment of the present disclosure has been described above. However, the present disclosure is not limited thereto. In the present embodiment, the amounts of the low melting point resin and the non-low melting point resin in the resin composition powder derived from the plastic waste are measured in the analysis step S1; however, the analysis step S1 is not essential. When the amounts of the low melting point resin and the non-low melting point resin in the plastic waste are known, for example, the analysis step S1 may be omitted. Furthermore, when it is not required to add the low melting point resin powder and the non-low melting point resin powder to the resin composition powder from the analysis results in the analysis step S1, the mixing step may be omitted. In the present embodiment, the amounts of the low melting point resin and the non-low melting point resin in the resin composition powder are measured in the analysis step S1; however, only the amount of the low melting point resin is measured and the amount obtained by subtracting the amount of the low melting point resin from the amount of the resin composition powder may be used as the amount of the non-low melting point resin, or only the amount of the non-low melting point resin is measured and the amount obtained by subtracting the amount of the non-low melting point resin from the amount of the resin composition powder may be used as the amount of the low melting point resin. In the present embodiment, furthermore, the amounts of the low melting point resin and the non-low melting point resin in the resin composition powder are measured using differences in specific gravity in the analysis step S1; however, the measurement method is not limited thereto. DSC (differential scanning calorimeter), GC-MS (gas chromatography-mass spectrometer), infrared absorption spectroscopy and elemental analysis (CHN corder), for example, may be used. When using DSC, the amount of the non-low melting point resin is measured, and the amount obtained by subtracting the amount of the non-low melting point resin from the amount of the resin composition powder may be used as the amount of the low melting point resin.

In the present embodiment, the resin composition powder stored in the storage tank 17 in the resin composition powder feeding unit 10 is used as a sample powder in the analysis step S1; however, the sample powder is not limited thereto. A coarse plastic powder pulverized by the washer 14 or plastic pieces before course pulverization, for example, may be used as the sample powder. In addition, when a coarse plastic powder or plastic pieces are used as the sample powder, the coarse plastic powder or the plastic pieces and the wood powder may be mixed and then finely pulverized.

In the present embodiment, the molding step S3 is carried out by extrusion molding; however, the method for molding a resin composition molded body is not limited thereto. The method for molding a resin composition molded body may be a method including melting the low melting point resin in the resin composition powder and forming the resin composition in a molten state. In the method for molding a resin composition molded body, for example, injection molding, press forming, cast molding or laminate molding using a 3D printer can be used.

In addition, in the present embodiment, the wood resin composition molded body including the wood powder has been described as an example of the resin composition molded body; however, it is not necessary to include the wood powder and it is only required to include the resin composition powder derived from the plastic waste. In addition, in the present embodiment, waste wood is used as a raw material for the wood powder; however, the raw material for the wood powder is not limited to waste wood.

EXAMPLES

The present disclosure will now be described in more detail based on examples. The present disclosure is not limited to these examples. It should be noted that materials described below were used in the present examples.

Resin composition powders A to D: resin composition powders obtained using waste plastic residues derived from general waste. The composition of the resin composition powder is shown in Table 1 below. The method for producing the resin composition powder and the method for analyzing composition are as follows.

(Method for producing resin composition powder)

Four types of veil-shaped waste plastic residues derived from general waste were prepared as a plastic waste. The amounts of the non-low melting point resin contained in the 4 prepared waste plastics were measured and the standard deviation thereof was calculated, and the result was 22.2 mass%. The veil-shaped waste plastic residues were obtained by separating and recovering the low melting point resin (polyethylene, polypropylene and polystyrene) from the plastic waste recovered as recyclable waste in accordance with the Containers and Packaging Recycling Law, and compressing the waste plastic residues after separating and recovering the low melting point resin into the veil shape. The waste plastic residues contained PP, PE, PS, PA6 and PET.

First, the veil-shaped waste plastic residues were put in a disintegrator and disintegrated. The obtained disintegrated material was subjected to a high-magnetic pulley type magnetic separator with a belt surface magnetic force of 20000 gauss to remove iron-containing material. The disintegrated material after removing the iron-containing material was then crushed by a uniaxial primary crusher until passing through a sieve with an aperture size of 50 mm to obtain plastic pieces. Magnetic substances contained in the obtained plastic pieces were removed and recovered using a hanging type magnetic separator and a pulley type magnetic separator. Next, non-magnetic metal contained in the plastic pieces was removed and recovered using a non-magnetic metal separator. Subsequently, attached material to the plastic pieces was pulverized until passing through a sieve with an aperture size of 12 mm and simultaneously washed using a wet pulverizer washer to obtain coarse plastic particles. Next, the volume of the coarse plastic particles obtained by the wet pulverizer washer was reduced by compression dehydration using a volume reduction compressor dehydrator to obtain a coarse plastic powder with a moisture content of 0.5 mass%. Finally, the coarse plastic powder was pulverized using a cutter mill type pulverizer until passing through a sieve with an aperture size of 1 mm. As described above, resin composition powders A to D were obtained.

(Method for analyzing composition of resin composition powder)

An aqueous solution of sodium chloride was obtained by stirring and mixing 500 mL of clean water and 100 g of sodium chloride until sodium chloride was dissolved. In addition, a commercially available liquid detergent (product name: laundry detergent NANOX for odor manufactured by Lion Corporation) was 100-fold diluted to obtain a surfactant aqueous solution. To the above-described aqueous solution of sodium chloride, 4.4 mL of the above-described surfactant aqueous solution was added and the obtained mixture was stirred and mixed to prepare an aqueous solution of sodium chloride (heavy liquid) for composition analysis.

The aqueous solution of sodium chloride for composition analysis was stirred to an extent which made eddies using a magnetic stirrer and 60 g of the resin composition powder was put in the eddies. After that, the magnetic stirrer was stopped after stirring for 5 minutes and left to stand for 10 minutes. The whole amount of floating material at the surface of the aqueous solution of sodium chloride after left to stand was skimmed. After skimming the whole amount of the floating material, the aqueous solution of sodium chloride was filtered using filter paper to recover sediment settled or floating in the aqueous solution of sodium chloride. The recovered floating material and sediment were sufficiently washed with clean water and then dried at 40°C overnight using a drier. The weight of the floating material and sediment after drying was measured. The amount of the floating material was used as the amount of the low melting point resin (PP, PE, PS) and the amount of the sediment was used as the amount of the non-low melting point resin (PA6, PET), and the ratio of the amount of the low melting point resin/the amount of the non-low melting point resin was calculated by the formula described below. The results are shown in Table 1 below. Ratio of amount of low melting point resin/amount of non-low melting point resin = weight of low melting point resin/weight of non-low melting point resin.

[Table 1]

|  | Ratio of amount of low melting point resin/amount of non-low melting point resin |
|---|---|
| Resin composition powder A | 0.09 |
| Resin composition powder B | 0.20 |
| Resin composition powder C | 3.00 |
| Resin composition powder D | 11.00 |

Low melting point resin powder: a powder obtained by mixing 3 types of raw materials, low-density polyethylene (Suntech-LD M1920 manufactured by Asahi Kasei Corporation), polypropylene (J106G manufactured by Prime Polymer Co., Ltd.), polystyrene (GPPS HF77 manufactured by PS Japan Corporation) each at 33.3 mass% and pulverizing the obtained mixture until passing through a sieve with an aperture size of 3 mm was used.

Non-low melting point resin powder: a PET powder obtained by pulverizing a PET waste until passing through a sieve with an aperture size of 3 mm.

Wood powder: a wood powder obtained by pulverizing waste wood until passing through a sieve with an aperture size of 300 mm.

Additives: a mixture including 3 parts by mass of a pigment, 3 parts by mass of a compatibilizing agent (maleic anhydride-modified polypropylene-based compatibilizing agent), 1 part by mass of a lubricant and 1 part by mass of a weathering material in this proportion.

[Example 1]

To the resin composition powder A, the low melting point resin powder was added in a proportion such that the ratio of the amount of the low melting point resin/the amount of the non-low melting point resin was 1.40, and the obtained mixture was mixed with a mixer to obtain a resin composition powder mixture.

Using a heat mixer, 60 parts by mass of the obtained resin composition powder mixture, 30 parts by mass of the wood powder and 10 parts by mass of additives were mixed at 150°C. The obtained mixture was molded using an extruder having a mold A with a rectangular cross sectional shape with a thickness of 30 mm and a width of 300 mm to obtain a plate-shaped resin composition molded body.

The moldability and water resistance of the obtained resin composition molded body were evaluated by methods described below. The results are shown in Table 3 below with the composition of the resin composition molded body calculated from the composition of the resin composition powder and the mixed amount of raw materials.

(Moldability)

The appearance of the obtained resin composition molded body was visually observed to judge the moldability thereof. Moldability was considered "A" when the number of generated cracks with a length of 1 mm or more at the ends in the width direction of the resin composition molded body was 2 or less, "B" when the number of generated cracks was 3 or more and "C" when the ends were largely damaged.

(Water resistance)

The resin composition molded body was soaked in warm water adjusted to 60°C. The resin composition molded body was taken out of warm water daily to measure the thickness of the resin composition molded body. The change rate of the thickness of the resin composition molded body to the thickness of the resin composition molded body on the previous day was calculated by the formula (1) described below:

Change rate of thickness of resin composition molded body (%) = (thickness of resin composition molded body - thickness of resin composition molded body on previous day)/thickness of resin composition molded body on previous day x 100 (1).

When the change rate of the thickness of the resin composition molded body was 0.5% or less, the expansion rate of the thickness of the resin composition molded body due to water absorption was considered to reach equilibrium and the equilibrium expansion rate of the thickness of the resin composition molded body was calculated using the formula (2) described below. It should be noted that the thickness of the resin composition molded body is the average of thickness on 5 sites in total: the central part of the plain surface and the vicinities of the 4 corners. Equilibrium expansion rate (%) = { (Tf-Ti) /Ti} x 100 (2). In the above formula, Tf (unit: mm) is the thickness of the resin composition molded body when the change rate of thickness is 0.5% or less, and Ti (unit: mm) is the thickness of the resin composition molded body before being soaked in warm water. Water resistance was considered "A" when the equilibrium expansion rate was 10% or less, "B" for above 10% and 20% or less and "C" for above 20%.

[Examples 2 to 8]

A resin composition powder was produced in the same manner as in Example 1 except that an added resin powder shown in Table 2 was added to the resin composition powder shown in Table 2 below in a proportion such that the ratio of the amount of the low melting point resin/the amount of the non-low melting point resin was a value shown in Table 2. A plate-shaped resin composition molded body was produced in the same manner as in Example 1 using the obtained resin composition powder mixture. It should be noted that a mold B with a rectangular cross sectional shape with a thickness of 30 mm and a width of 120 mm was used as a mold in the extruder in Examples 6 to 8. The moldability and water resistance of the obtained resin composition molded body were evaluated in the same manner as in Example 1. The results are shown in Table 3 below.

[Reference Examples 1 to 5]

A plate-shaped resin composition molded body was produced in the same manner as in Example 1 except that using a powder shown in Table 3 below as the resin composition powder, 60 parts by mass of the resin composition powder, 30 parts by mass of the wood powder and 10 parts by mass of additives were mixed using a heat mixer at 150°C. It should be noted that the mold B with a rectangular cross sectional shape with a thickness of 30 mm and a width of 120 mm was used as a mold in the extruder in Reference Example 5. The moldability and water resistance of the obtained resin composition molded body were evaluated in the same manner as in Example 1. The results are shown in Table 3 below.

[Table 2]

| | Type of resin composition powder | Type of added resin powder | Composition of resin composition powder mixture |
|---|---|---|---|
| | | | Ratio of amount of low melting point resin/amount of non-low melting point resin |
| Example 1 | Resin composition powder A | Low melting point resin powder | 1.40 |
| Example 2 | Resin composition powder B | Low melting point resin powder | 1.40 |
| Example 3 | Resin composition powder A | Low melting point resin powder | 0.33 |
| Example 4 | Resin composition powder C | Non-low melting point resin powder | 1.40 |
| Example 5 | Resin composition powder D | Non-low melting point resin powder | 0.71 |
| Example 6 | Resin composition powder A | Low melting point resin powder | 1.40 |
| Example 7 | Resin composition powder D | Non-low melting point resin powder | 3.00 |
| Example 8 | Resin composition powder D | Non-low melting point resin powder | 5.00 |

[Table 3]

| | Type of resin composition powder | Composition | | | | | Type of mold | Evaluation of resin composition molded body | |
| --- | --- | --- | --- | --- | --- | --- | --- | --- | --- |
| | | Low melting point resin(mass%) | Non-low melting point resin(mass%) | Ratio of amount of low melting point resin/amount of non-low melting point resin | Wood powder (mass%) | Additives (mass%) | | Moldability | Water resistance |
| Example 1 | Resin composition powder A | 35 | 25 | 1.40 | 30 | 10 | Mold A | A | A |
| Example 2 | Resin composition powder B | 35 | 25 | 1.40 | 30 | 10 | Mold A | A | A |
| Example 3 | Resin composition powder A | 15 | 45 | 0.33 | 30 | 10 | Mold A | A | A |
| Example 4 | Resin composition powder C | 35 | 25 | 1.40 | 30 | 10 | Mold A | A | A |
| Example 5 | Resin composition powder D | 25 | 35 | 0.71 | 30 | 10 | Mold A | A | A |
| Example 6 | Resin composition powder A | 35 | 25 | 1.40 | 30 | 10 | Mold B | A | A |
| Example 7 | Resin composition powder D | 45 | 15 | 3.00 | 30 | 10 | Mold B | A | A |
| Example 8 | Resin composition powder D | 50 | 10 | 5.00 | 30 | 10 | Mold B | A | A |
| Reference Example 1 | Resin composition powder A | 5 | 55 | 0.09 | 30 | 10 | Mold A | A | C |

| | Type of resin composition powder | Composition | | | | | Type of mold | Evaluation of resin composition molded body | |
|---|---|---|---|---|---|---|---|---|---|
| | | Low melting point resin(mass%) | Non-low melting point resin(mass%) | Ratio of amount of low melting point resin/amount of non-low melting point resin | Wood powder (mass%) | Additives (mass%) | | Moldability | Water resistance |
| Reference Example 2 | Resin composition powder B | 10 | 50 | 0.20 | 30 | 10 | Mold A | A | B |
| Reference Example 3 | Resin composition powder C | 45 | 15 | 3.00 | 30 | 10 | Mold A | B | A |
| Reference Example 4 | Resin composition powder D | 55 | 5 | 11.00 | 30 | 10 | Mold A | C | A |
| Reference Example 5 | Resin composition powder D | 55 | 5 | 11.00 | 30 | 10 | Mold B | B | A |

From the results in Table 3, it is found that in the raw material powder mixture obtained by adding at least one of the low melting point resin-containing powder or the non-low melting point resin-containing powder prepared in advance to the resin composition powder derived from the plastic waste and mixing the obtained mixture, the moldability is improved, and a resin composition molded body can be stably produced. The water resistance of the resin composition molded bodies in Reference Examples 1 and 2 was reduced. This is because the amount of the low melting point resin was smaller, the wood powder having higher water absorption properties could not be sufficiently coated with the low melting point resin and the wood powder absorbed water. In addition, the composition of the resin composition molded body obtained in Reference Example 3 was the same as of the resin composition molded body obtained in Example 7; however, the molded body was reduced. This is because the width of the mold B used in Example 7 was 120 mm while the width of the mold A used in Reference Example 3 was 300 mm, and thus a difference in the flow rate of the molten material of the raw material powder mixture in the mold became greater. In the resin composition molded bodies obtained in Reference Examples 4 and 5, moldability was reduced. This is because the amount of the low melting point resin in the raw material powder mixture was higher and thus the viscosity of molten material of the raw material powder mixture was reduced, and the flowability of the molten material of the raw material powder mixture in the mold became too high and thus a difference in the flow rate of the molten material of the raw material powder mixture was greater between both the ends adjacent to the inner surface of the mold and the central part not adjacent to the inner surface of the mold. The moldability of the resin composition molded body obtained in Reference Example 4 was reduced compared to that of the resin composition molded body obtained in Reference Example 5. This is because the mold A used in Reference Example 4 had a width of 300 mm and a difference in the flow rate of the molten material of the raw material powder mixture in the mold was greater.

The aspects of the present disclosure will be added below.

(Supplementary note 1)

A method for producing a resin composition molded body, including preparing a plastic waste which includes a low melting point resin with a melting point in a range of 80°C or higher and lower than 190°C, and a non-low melting point resin which is one of a high melting point resin with a melting point of 190°C or higher and a thermosetting resin or a mixture of both the resins, pulverizing the plastic waste to obtain a resin composition powder, adding at least one of a low melting point resin-containing powder or a non-low melting point resin-containing powder prepared in advance to the resin composition powder and mixing the obtained mixture to obtain a resin composition powder mixture adjusted so that the ratio of the amount of the low melting point resin to the amount of the non-low melting point resin is in a predetermined range, and molding the resin composition powder mixture to obtain a resin composition molded body.

(Supplementary note 2)

The method for producing a resin composition molded body according to supplementary note 1, including measuring the amount of at least one of the low melting point resin or the non-low melting point resin in the plastic waste, and adjusting the amounts of the low melting point resin-containing powder and the non-low melting point resin-containing powder added to the resin composition powder based on the obtained measurement value of the amount.

(Supplementary note 3)

The method for producing a resin composition molded body according to supplementary note 2, wherein the method for measuring the amounts of the low melting point resin and the non-low melting point resin in the plastic waste is a method including soaking a sample powder obtained by pulverizing the plastic waste in a heavy liquid, measuring the amount of floating material at the surface of the heavy liquid and the amount of sediment, and using the amount of the floating material as the amount of the low melting point resin, and the amount of the sediment as the amount of the non-low melting point resin.

(Supplementary note 4)

The method for producing a resin composition molded body according to supplementary note 3, wherein the specific gravity of the heavy liquid is 1.08 to 1.13.

(Supplementary note 5)

The method for producing a resin composition molded body according to supplementary note 3 or 4, wherein the heavy liquid is an aqueous solution of sodium chloride.

(Supplementary note 6)

The method for producing a resin composition molded body according to any one of supplementary notes 1 to 5, wherein the amounts of the low melting point resin-containing powder and the non-low melting point resin-containing powder added to the resin composition powder are adjusted so that the mass ratio of the amount of the non-low melting point resin to the amount of the low melting point resin contained in the resin composition powder mixture is in a range of 1/3 to 5.

(Supplementary note 7)

The method for producing a resin composition molded body according to any one of supplementary notes 1 to 6, wherein the resin composition powder is a powder which passes through a sieve with an aperture size of 3 mm.

(Supplementary note 8)

The method for producing a resin composition molded body according to any one of supplementary notes 1 to 7, wherein the low melting point resin-containing powder contains 60 mass% or more of the low melting point resin.

(Supplementary note 9)

The method for producing a resin composition molded body according to any one of supplementary notes 1 to 8, wherein the non-low melting point resin-containing powder contains 60 mass% or more of the non-low melting point resin.

(Supplementary note 10)

The method for producing a resin composition molded body according to any one of supplementary notes 1 to 9, including adding a cellulose-based material powder prepared in advance to the resin composition powder and mixing the obtained mixture to obtain a cellulose-based material-containing resin composition powder mixture, and molding the cellulose-based material-containing resin composition powder mixture.

(Supplementary note 11)

The method for producing a resin composition molded body according to any one of supplementary notes 1 to 10, wherein production units for the resin composition molded body are separated depending on the type of the plastic waste and the standard deviation of the amount of the low melting point resin in synthetic resin contained in the plastic waste used in each production unit is 1 mass% or more.

(Supplementary note 12)

The method for producing a resin composition molded body according to supplementary note 11, wherein the standard deviation of the amount of the low melting point resin is 2 mass% or more.

(Supplementary note 13)

The method for producing a resin composition molded body according to any one of supplementary notes 1 to 12, wherein the resin composition molded body is molded by extrusion molding of the resin composition powder.

(Supplementary note 14)

The method for producing a resin composition molded body according to supplementary note 13, wherein the molding temperature of the extrusion molding is lower than a temperature that is lower than the melting point of the non-low melting point resin contained in the resin composition powder by 10°C.

(Supplementary note 15)

A method for producing a resin composition molded body, including
preparing a plastic waste which includes a low melting point resin with a melting point in a range of 80°C or higher and lower than 190°C and a non-low melting point resin which is a high melting point resin with a melting point of 190°C or higher or a thermosetting resin, pulverizing the plastic waste to obtain a resin composition powder, and measuring the amount of at least one of the low melting point resin or the non-low melting point resin in the plastic waste and then molding the resin composition powder to obtain a resin composition molded body.

(Supplementary note 16)

The method for producing a resin composition molded body according to supplementary note 15, including adding at least one of a low melting point resin-containing powder or a non-low melting point resin containing-powder prepared in advance to the resin composition powder based on the measurement value of the amount of at least one of the low melting point resin or the non-low melting point resin in the plastic waste and adjusting the ratio of the amount of the low melting point resin to the amount of the non-low melting point resin to a predetermined to obtain a resin composition molded body, or directly molding the resin composition powder to obtain a resin composition molded body.

EXPLANATION OF REFERENCE NUMERALS

10: Resin composition powder feeding unit, 11: crusher, 12: magnetic separator, 13: non-magnetic metal separator, 14: washer, 15: compression volume reducer, 16: pulverizer, 17: storage tank, 18: measuring tank, 20: wood powder feeding unit, 21: crusher, 22: magnetic separator, 23: pulverizer, 24: storage tank, 25: measuring tank, 30: low melting point resin powder feeding unit, 31: storage tank, 32: measuring tank, 40: non-low melting point resin powder feeding unit, 41: storage tank, 42: measuring tank, 50: additive feeding unit, 51: storage tank, 52: measuring tank, 60: molded body producing unit, 61: mixer, 62: storage tank, 63: extruder, 100: resin composition molded body producing system, 200: mold, 300: molten material, 301: fountain flow, 302: flow front, 310: skin layer.

**Claims**

1.  A method for producing a resin composition molded body, comprising

    preparing a plastic waste which comprises a low melting point resin with a melting point in a range of 80°C or more and less than 190°C and a non-low melting point resin which is one of a high melting point resin with a melting point of 190°C or higher or a thermosetting resin or a mixture of both the resins,
    pulverizing the plastic waste to obtain a resin composition powder,
    adding at least one of a low melting point resin-containing powder or a non-low melting point resin-containing powder prepared in advance to the resin composition powder and mixing an obtained mixture to obtain a resin composition powder mixture adjusted so that a ratio of an amount of the low melting point resin to an amount of the non-low melting point resin is in a predetermined range, and
    molding the resin composition powder mixture to obtain a resin composition molded body.

2.  The method for producing a resin composition molded body according to claim 1, comprising measuring an amount of at least one of the low melting point resin or the non-low melting point resin in the plastic waste, and
    adjusting amounts of the low melting point resin-containing powder and the non-low melting point resin-containing powder to be added to the resin composition powder based on an obtained measurement value of the amount.

3.  The method for producing a resin composition molded body according to claim 2, wherein a method for measuring the amounts of the low melting point resin and the non-low melting point resin in the plastic waste is a method comprising soaking a sample powder obtained by pulverizing the plastic waste in a heavy liquid,

    measuring an amount of floating material at a surface of the heavy liquid and an amount of sediment, and using the amount of the floating material as the amount of the low melting point resin, and using the amount of the sediment as the amount of the non-low melting point resin.

4.  The method for producing a resin composition molded body according to claim 3, wherein a specific gravity of the heavy liquid is 1.08 to 1.13.

5.  The method for producing a resin composition molded body according to claim 3 or 4, wherein the heavy liquid is an aqueous solution of sodium chloride.

6.  The method for producing a resin composition molded body according to any one of claims 1 to 5, wherein amounts of the low melting point resin-containing powder and the non-low melting point resin-containing powder to be added to the resin composition powder are adjusted so that a mass ratio of the amount of the non-low melting point resin to the amount of the low melting point resin contained in the resin composition powder mixture is in a range of 1/3 to 5.

7. The method for producing a resin composition molded body according to any one of claims 1 to 6, wherein the resin composition powder is a powder which passes through a sieve with an aperture size of 3 mm.

8. The method for producing a resin composition molded body according to any one of claims 1 to 7, wherein the low melting point resin-containing powder contains 60 mass% or more of the low melting point resin.

9. The method for producing a resin composition molded body according to any one of claims 1 to 8, wherein the non-low melting point resin-containing powder contains 60 mass% or more of the non-low melting point resin.

10. The method for producing a resin composition molded body according to any one of claims 1 to 9, comprising

adding a cellulose-based material powder prepared in advance to the resin composition powder and mixing an obtained mixture to obtain a cellulose-based material-containing resin composition powder mixture, and molding the cellulose-based material-containing resin composition powder mixture.

11. The method for producing a resin composition molded body according to any one of claims 1 to 10, wherein production units for the resin composition molded body are separated depending on type of the plastic waste and a standard deviation of an amount of the low melting point resin in synthetic resin contained in the plastic waste used in each production unit is 1 mass% or more.

12. The method for producing a resin composition molded body according to any one of claims 1 to 11, wherein the resin composition molded body is molded by extrusion molding of the resin composition powder.

13. The method for producing a resin composition molded body according to claim 12, wherein a molding temperature of the extrusion molding is lower than a temperature that is lower than a melting point of the non-low melting point resin contained in the resin composition powder by 10°C.

14. A method for producing a resin composition molded body, comprising

preparing a plastic waste which comprises a low melting point resin with a melting point in a range of 80°C or higher and lower than 190°C and a non-low melting point resin which is a high melting point resin with a melting point of 190°C or higher or a thermosetting resin,
pulverizing the plastic waste to obtain a resin composition powder, and
measuring an amount of at least one of the low melting point resin or the non-low melting point resin in the plastic waste and then molding the resin composition powder to obtain a resin composition molded body.

15. The method for producing a resin composition molded body according to claim 14, comprising adding at least one of a low melting point resin-containing powder or a non-low melting point resin-containing powder prepared in advance to the resin composition powder based on a measurement value of an amount of at least one of the low melting point resin or the non-low melting point resin in the plastic waste and adjusting a ratio of the amount of the low melting point resin to the amount of the non-low melting point resin to a predetermined range to obtain a resin composition molded body, or directly molding the resin composition powder to obtain a resin composition molded body.

FIG. 1

# FIG. 2

FIG. 3

## INTERNATIONAL SEARCH REPORT

| International application No. |
|---|
| **PCT/JP2024/033520** |

**A. CLASSIFICATION OF SUBJECT MATTER**

*B29B 11/14*(2006.01)i; *B29B 17/02*(2006.01)i
FI: B29B11/14; B29B17/02

According to International Patent Classification (IPC) or to both national classification and IPC

**B. FIELDS SEARCHED**

Minimum documentation searched (classification system followed by classification symbols)

B29B11/14; B29B17/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | KR 10-2022-0002779 A (POSCO) 07 January 2022 (2022-01-07) claims, paragraphs [0008]-[0079], fig. 1-3 | 1-2, 6-12, 14-15 |
| Y | | 3-5, 13 |
| X | JP 7-227849 A (MITSUBISHI SHOJI PLASTICS CORPORATION) 29 August 1995 (1995-08-29) claims, paragraphs [0010]-[0019] | 1-2, 6-15 |
| Y | | 3-5, 13 |
| Y | JP 10-258426 A (NKK CORP.) 29 September 1998 (1998-09-29) claims, paragraphs [0008]-[0016] | 3-5 |
| A | JP 2005-66952 A (DAICEL CHEM. IND. LTD.) 17 March 2005 (2005-03-17) entire text | 1-15 |
| A | JP 11-320579 A (AICELLO CHEMICAL CO., LTD.) 24 November 1999 (1999-11-24) entire text | 1-15 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **15 October 2024** | **29 October 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/033520**

| Patent document cited in search report | | | Publication date (day/month/year) | Patent family member(s) | Publication date (day/month/year) |
|---|---|---|---|---|---|
| KR | 10-2022-0002779 | A | 07 January 2022 | (Family: none) | |
| JP | 7-227849 | A | 29 August 1995 | (Family: none) | |
| JP | 10-258426 | A | 29 September 1998 | (Family: none) | |
| JP | 2005-66952 | A | 17 March 2005 | (Family: none) | |
| JP | 11-320579 | A | 24 November 1999 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001353707 A
- KR 1020220002779

- JP H7227849 A

**Non-patent literature cited in the description**

- Flowchart of plastic products, plastic waste and resource recovery. Plastic Waste Management Institute, 2020